# EUROPEAN PATENT APPLICATION

(11) **EP 3 666 520 A1**
(43) Date of publication of application: **17.06.2020**
(21) Application number: 18212516.1
(22) Date of filing: 14.12.2018
(51) Int. Cl.: B32B 27/08, B32B 27/18, B32B 27/30, B32B 27/32, B32B 27/36

(54) **ANTIFOG MULTILAYER FILM**

(71) Applicant: Cryovac, LLC, Charlotte, NC 28208 (US)
(72) Inventor: Forloni, Roberto, 20017 Rho (IT); Spigaroli, Romano, 20025 Legnano (IT)
(74) Representative: Di Fiore, Simona

(57) **Abstract**

The present invention relates to a multilayer, preferably polyester based film with antifog properties and to the use of such film in packaging products, especially food products which release moisture into the package. The invention also relates to the packages obtained with such film.

## Description

### Technical Field

The present invention relates to a multilayer, preferably polyester based film endowed with antifog properties and to its use in packaging, especially of food products having a high water content, which tend to release moisture into the package.

### Background art

Perishable food products such as meat, fish, freshly cooked food, fruits, vegetables and the like are commonly packaged in trays of different materials and shapes that are covered at the top by a transparent plastic film (generally known as "lidding film"), which can be sealed to the tray. Generally, the tray can have a perimeter lip extending above the food products it contains so that the plastic film covering the top of the tray is not in direct contact with the packaged food. Alternatively, some food products can be wrapped in plastic films or packaged into plastic bags or pouches, which are then sealed.

These packaging systems allow the consumer to see the stored food product through the transparent plastic film. For this reason, it is important that the transparent plastic film has a good see-through quality and is able to maintain this quality throughout the whole shelf-life of the food product, in order to allow consumer inspection.

However, packaging food products in the manner described above presents a problem: upon refrigeration, small moisture droplets may condense on the inner, food-contact or food-side surface of the plastic film, thus creating a "fog" that clouds the surface of the film and obstructs or completely disrupts the view through the film ("fogging"). This results in the consumer's inability to inspect the product and, consequently, in a negative consumer perception.

Unfortunately, this effect is particularly evident for "fresh" food products, which have a high moisture content, such as meat, fish, cheese, ready meals, fruits and vegetables, which generally are visually checked for their freshness by the consumer with great attention. The formation of fog (i.e. small moisture droplets) on the food-facing side of the film is not only aesthetically poor, but may negatively affect the quality and preservation of the packaged food, for example it may interfere with its organoleptic properties and even accelerate its spoiling process.

In order to reduce the negative effects of fogging, antifog agents can be employed in the preparation of packaging materials.

Antifog agents known in the art are generally surface activators such as non-ionic surfactants, which decrease the surface tension of the water droplets that may form on the film's surface due to condensation. As a result, the surface tension ratio between the water and the film surface is reduced and the formation of moisture droplets is prevented. Rather, the moisture on the film surface forms a continuous layer of water. Examples of antifog agents are esters of aliphatic alcohols, polyethers, polyhydric alcohols, esters of polyhydric aliphatic alcohols, poly-ethoxylated aromatic alcohols, nonionic ethoxylates, hydrophilic fatty acid esters.

Several approaches have been developed in order to obtain films having antifog properties through the use of these agents.

One approach involves dispersing one or more antifog agents into the plastic film resin during the processing of the film. Generally, these additives have a certain level of incompatibility with the polymer matrix they are blended into and, as a result, migrate to the surface of the film, where they perform their effect.

For example, EP2599821 describes polylactic acid based antistatic multilayer sheets for printed molded articles, in which a layer of the sheet is made of a composition comprising polylactic acid, ionic and non-ionic surfactants. These sheets are endowed with transparency, antistatic, antifog and antiblock properties. In particular, in order to achieve both antistatic and antifog properties, it is taught that the ratio between the ionic surface active agent and the nonionic surface active agent is between 6 and 10.

Polyester based films, in particular polyethylene terephthalate (PET) based films, are commonly used as lidding films, as well as for manufacturing bags, pouches or other kinds of packages. Polyester based, and especially PET based films are particularly advantageous as they can be easily heat-sealed to themselves, thus forming, e.g., bags, or to polyester containers such as trays or cups. Alternatively, to improve the heat-sealability of PET based film to other, non-polyester materials, a heat-sealable layer of a lower melting material can be provided on the film and, in the case of tray lidding packages, on the portion of the tray coming in contact with the film. The heat-sealable layer may be coextruded with the PET based layer of the film simultaneously through a single die as described, for example, in EP1529797 and WO2007/093495, but this entails the use of additional material, with increased costs and supply chain complications.

It has been shown that the antifog agents do not migrate to the surface of polyester films in sufficient amount to exert an antifog activity. This occurs because the antifog agents are generally polar and compatible with polyesters, thus, when they are blended into the polyester matrix, remain entrapped in this matrix due to the chemical compatibility and are not able to migrate to the surface of the film. Such difficulty to migrate results in a low concentration of the antifog agents on the film surface and, accordingly, poor antifog properties of the polyester film.

Surfactants have been incorporated into polyester films but with the aim of obtaining an antistatic effect. For example, WO2013/169375 discloses antistatic polyester based films, wherein antistatic properties are obtained by incorporating a combination of an anionic and non-ionic surfactants into a polyester based layer. The polyesters used in the experimental section are semi-crystalline polyesters. However, the amounts of surfactants at the surface of the film are not sufficient to obtain the lowering of the surface tension which is necessary to achieve an antifog effect.

US6033758 discloses a package lid made of a laminate comprising two or more films, at least one of which is a coextruded, multilayer film. In both films, the layer facing the other film comprises polyolefins, or blends of polyolefins, possibly in admixture with a tie resin such as EVA, EMA, acrylic acid copolymers, methyl acrylic acid copolymers, to improve the adhesion between the two films of the laminate. The film facing the internal portion of the package may comprise an antifog additive to prevent accumulation of condensation on the inside surface of the lid.

Another approach to obtain films with antifog properties involves applying an antifog coating directly onto the inner, food-side surface of the plastic film.

For example, WO2014006205 discloses a coextruded biaxially oriented polyester film coated with an antifog composition comprising an antifog agent, a cationic polysaccharide and a diluent.

The approach of using a coating is currently the most common one, especially for polyester films, for the reasons set out above. It provides the advantage that the antifog agents are applied directly to the film surface, where they perform their task but, on the other hand, it also has some drawbacks. First, since such approach requires an additional coating step, it increases the manufacturing costs of the film and causes supply chain complications. Also, the antifog coating can easily be removed from the plastic film, with a consequent reduction, or even loss of the antifog effect. Coating removal may occur, e.g. during processing/storage of the film, during packaging of the product, or because of the contact between the packaged product and the coated film surface, especially if the packaged product comprises hard portions such as bones or cheese crusts.

In the light of the above, there is a strong need in the art to provide a multilayer, preferably polyester based, heat-sealable film endowed with good antifog properties, which can be prepared with a simple and cost-effective manufacturing method and which maintains its antifog properties over time. Additionally, such film should also have good optical properties (haze, clarity and gloss), which result in transparency and optimal see-through properties, which in turn allow the customer to visually inspect the packaged product.

### Summary of the invention

The inventors of the present invention have surprisingly found that it is possible to overcome the problems of surface migration of the antifog agents usually found with polyester films and guarantee excellent antifog properties which remain stable over time by incorporating the antifog agent in an inner layer of a multilayer film having a sealant layer made of polyesters, wherein such inner layer comprises an optionally modified polyolefin and/or an ethylene (meth)acrylate/(meth)acrylic acid copolymer.

Accordingly, a first object of the present invention is an antifog, optionally coextruded multilayer film comprising:
1) an outer sealant layer comprising a major proportion of one or more polyesters;
2) an inner layer comprising at least one optionally modified polyolefin and/or at least one ethylene (meth)acrylate/(meth)acrylic acid copolymer and at least one antifog agent;
3) an outer layer, preferably comprising one or more polyesters.

A second object of the present invention is a process to manufacture the film according to the first object, comprising the steps of:
a) co-extruding at least layers 1), 2) and 3) to obtain a multilayer film,
b) optionally orienting, in at least one of the machine (MD) and/or transverse directions (TD), preferably in both, the multilayer film obtained from step a),
c) optionally heat-setting the oriented film obtained from step b).

A third object of the present invention is a thermoformed support obtainable by thermoforming a film according to the first object of the invention, wherein the sealant layer of the film forms the surface of the support that will come into contact or face a supported product. A package can be manufactured which comprises such thermoformed support, a product placed on the support, and a lid, which is hermetically sealed all around onto said support, thus enclosing the product. The lid can preferably have a polyester sealant layer which is sealed onto the support, more preferably it can be a film according to the first object.

A fourth object of the present invention is a flexible container obtainable by heat-sealing a film according to the first object of the invention on itself, or by heat-sealing two films, of which at least one is a film according to the first object of the invention, wherein the sealant layer of the film(s) of the invention faces the inside of the container.

A fifth object of the present invention is a lidded-package comprising a support, for example a container, a product placed on the support, and a lid comprising the film according to the first object of the present invention, wherein the sealant layer of the film is in contact with or faces the product, and wherein the film is hermetically sealed all around onto said support, thus enclosing the product.

A sixth object of the present invention is a wrapped package comprising a product, optionally placed on a support, and a film according to the first object of the invention wrapped around said product or around both the product and the support, wherein the sealant layer of the film is in contact with or faces the product.

A seventh object of the present invention is the use of the film according to the first object of the invention for packaging a product, preferably a food product.

### Definitions

The term "polyester" is used herein to refer to both homopolyesters and copolyesters.

The term "homopolyester" refers to polymers obtained from the condensation of one dicarboxylic acid with one diol.

The term "copolyester" refers to polymers obtained from the condensation of at least one dicarboxylic acid with at least two different diols or at least two different dicarboxylic acids with at least one diol.

Suitable dicarboxylic acids include aromatic, cycloaliphatic and aliphatic dicarboxylic acids. Suitable aromatic dicarboxylic acids include terephthalic acid, isophthalic acid, phthalic acid, naphthalic acid, or 2,5-, 2,6- or 2,7-naphthalenedicarboxylic acid. Terephthalic acid is preferred.

Among the cycloaliphatic dicarboxylic acids, the cyclohexanedicarboxylic acids (in particular cyclohexane-1,4-dicarboxylic acid) are suitable.

Among the aliphatic dicarboxylic acids, the (C₃-C₁₉)alkanedioic acids are particularly suitable, in particular succinic acid, sebacic acid, adipic acid, azelaic acid, suberic acid and pimelic acid.

The diols (also referred to as glycols) may be straight chained or branched. Suitable diols are, for example, aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol, and cycloaliphatic diols such as 1,4-cyclohexanedimethanol and 1,4-cyclohexane diol, optionally heteroatom-containing diols having one or more rings.

Examples of suitable homopolyesters are, for instance, polyesters of ethylene glycol and terephthalic acid, i.e. poly (ethylene terephthalate) (PET). Preference is given to polyesters that contain ethylene units and include, based on the dicarboxylate units, at least 90 mol %, more preferably at least 95 mol %, of terephthalate units. The remaining monomer units may be selected from other dicarboxylic acids or diols.

Examples of suitable copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; (iii) copolyesters of sebacic acid and terephthalic acid with an aliphatic glycol, preferably butylene glycol; (iv) copolyesters of ethylene glycol, terephthalic acid and isophthalic acid. Other suitable copolyesters are glycol-modified polyesters, i.e. copolyesters obtained by copolymerization of a dicarboxylic acid and at least two diols; typical glycol-modified polyesters are, for example, PETG, obtained by copolymerization of terephthalic acid, ethylene glycol and a further glycol, for example cyclohexanedimethanol.

As used herein, the expressions "a polyester based film" or "a polyester based layer" refer to a film or a film layer, respectively, substantially made of polyesters.

As used herein, the expression "a film (or a layer) substantially made of polyesters" refers to a film (or a film layer) comprising at least 60%, 70%, 80%, 90% by weight of polyesters, including homopolyesters or copolyesters as previously defined or their admixtures.

As used herein, the term "major proportion" of one or more resins in a layer of the film means that more than 50% by weight of said resin(s) is present in said layer.

As used herein the expression "amorphous" referred to a polyester or a copolyester refers to a polyester or a copolyester with an absence of a regular three-dimensional arrangement of molecules or subunits of molecules extending over distances, which are large relative to atomic dimensions. However, regularity of structure may exist on a local scale (see "Amorphous Polymers" in Encyclopedia of Polymer Science and Engineering, 2ndEd pp 789-842, J. Wiley & Sons Inc 1985). In particular, the term refers to a polyester or copolyester having no measurable melting point (less than 0.5 cal/g) by differential scanning calorimetry (DSC) or no heat of fusion as measured by DSC using for example ASTM 3418. The term also includes polyesters and copolyesters that are obtained and marketed under a (semi)crystalline form but become amorphous after they are heated during extrusion, such as for instance Eastobond 19412 by Eastman Chemical. Suitable amorphous copolyesters are those derived from an aliphatic diol and a cycloaliphatic diol with one or more dicarboxylic acid(s), preferably an aromatic dicarboxylic acid. Typical amorphous copolyesters include copolyesters of terephthalic acid with an aliphatic diol and a cycloaliphatic diol, especially ethylene glycol and 1,4-cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65.

As used herein, the expressions "semicrystalline or "crystalline" referred to a polyester or a copolyester refer to a polyester or a copolyester that does not fall within the above definition of amorphous polyester and which has a measurable melting point (measured by DSC according to ASTM 3418).

As used herein the expression "aromatic polyester" refers to homo or copolyesters in which the only or the prevalent dicarboxylic acid is an aromatic dicarboxylic acid as previously defined.

As used herein, the term "polyolefin" is used with reference to any thermoplastic polymer deriving from polymerisation of one or more simple olefins, such as ethylene, propylene and butene. The polymer may be a homopolymer, consisting of repeating units of one single olefin or a copolymer, consisting of a major proportion of one olefin and a minor proportion of one or more other olefins copolymerisable therewith. The term polyolefin specifically includes ethylene homo- and copolymers, butene homo- and co- polymers, propylene homo- and co- polymers and the like.

The expression "ethylene-alpha-olefin copolymer" as used herein, refers to copolymers of ethylene, comprising a major portion of ethylene and a minor portion of one or more alpha-olefins comonomers, preferably (C4-C10)-alpha-olefins, such as 1-butene, 1-hexene and/or 1-octene. Depending on the composition in monomers and polymerization process employed, polymers with a different degree of branching and a different density can be obtained. For example, the above term include polymers such as linear low density polyethylene (LLDPE) with a density usually in the range of from about 0.900 g/cc to about 0.930 g/cc, linear medium density polyethylene (LMDPE) with a density usually in the range of from about 0.930 g/cc to about 0.945 g/cc, and very low and ultra low density polyethylene (VLDPE and ULDPE) with a density lower than about 0.915 g/cc, typically in the range 0.868 to 0.915 g/cc.

As used herein, the term "ethylene (meth)acrylate/(meth)acrylic acid copolymer" refers to a copolymer of ethylene with (meth)acrylate esters or (meth)acrylic acid.

As used herein, the term "copolymer of ethylene with (meth)acrylate esters" refers to a copolymer of ethylene with methacrylate or acrylate esters. For example, the term includes ethylene-ethyl (meth)acrylate co-polymer, ethylene-butyl (meth)acrylate co-polymer, ethylene-methyl (meth)acrylate co-polymer and the like. The copolymer typically contains between 15 to 40%, preferably between 20 and 30% by weight of acrylate or methacrylate units.

As used herein, the term "copolymer of ethylene with (meth)acrylic acid" refers to a copolymer of ethylene with acrylic or methacrylic acid.

As used herein, the expressions "ethylene-vinyl acetate copolymer" or "EVA" refer to a copolymer formed from ethylene and vinyl acetate monomers or from ethylene, vinyl acetate and carbon monoxide monomers, wherein the ethylene derived units in the copolymer are present in major amounts, preferably between about 60% and 98% by weight, more preferably between about 70% and about 96% by weight, even more preferably between about 80% and about 95% by weight, still more preferably between about 75% and about 94% and the vinyl acetate and monoxide derived units in the copolymer are present in minor amounts, preferably between about 2% and about 40% by weight, more preferably between about 4% and about 30% by weight, even more preferably between about 5% and about 25%, still more preferably between about 6% and about 20%, for example 18% by weight.

As used herein the term "modified" refers to a polymer modified with an anhydride functionality, either grafted onto the polymer or copolymerised therewith. The anhydride functionality can be an anhydride of maleic acid, crotonic acid, citraconic acid, itaconic acid, fumane acid, etc., and is inclusive of derivatives of such functionalities, such as acids, esters, and metal salts derived therefrom.

As used herein the term "anhydride modified polyolefin" refers to a polyolefin having an anhydride functionality associated therewith, either grafted onto the polymer or copolymerised therewith. The anhydride functionality can be an anhydride of maleic acid, crotonic acid, citraconic acid, itaconic acid, fumane acid, etc., and is inclusive of derivatives of such functionalities, such as acids, esters, and metal salts derived therefrom.

In particular, "anhydride modified ethylene alpha olefin copolymer" or "anhydride modified ethylene methylacrylate copolymer" refers to such polymers having an anhydride functionality associated therewith, either grafted onto the polymer or copolymerised therewith. The anhydride functionality can be an anhydride of maleic acid, crotonic acid, citraconic acid, itaconic acid, fumane acid, etc., and is inclusive of derivatives of such functionalities, such as acids, esters, and metal salts derived therefrom.

As used herein the expressions "ionomer" or "neutralized" referred to an ethylene (meth)acrylic acid copolymer refer to an ethylene (meth)acrylic acid copolymer, partially neutralized with a mono or divalent metal ion, such as zinc, lithium, sodium, potassium, calcium and magnesium. Commercially available resins of this kind are Surlyn by Dupont.

As used herein the expression "masterbatch" refers to a premixed composition in which one or more additives are dispersed into a carrier resin. A masterbatch is typically provided as granules or pellets, and is generally blended with one or more target resins during extrusion, in order to impart to the final product the properties of the additive(s). The carrier resin of the masterbatch and the target resins to which the masterbatch is added can be the same or different, and can be either chemically compatible or non-compatible. In the context of the present invention, the masterbatch preferably comprises an antifog agent.

As used herein the term "polyamide" refers to high molecular weight polymers having amide linkages along the molecular chain, and refers more specifically to synthetic polyamides such as nylons. Such term encompasses both homo-polyamides and co-(or ter-) polyamides. It also specifically includes aliphatic polyamides or co-polyamides, aromatic polyamides or co-polyamides, and partially aromatic polyamides or co-polyamides, modifications thereof and blends thereof. The homo-polyamides are derived from the polymerization of a single type of monomer comprising both the chemical functions, which are typical of polyamides, i.e. amino and acid groups, such monomers being typically lactams or aminoacids, or from the polycondensation of two types of polyfunctional monomers, i.e. polyamines with polybasic acids. The co-, ter-, and multi-polyamides are derived from the copolymerization of precursor monomers of at least two (three or more) different polyamides. As an example in the preparation of the co-polyamides, two different lactams may be employed, or two types of polyamines and polyacids, or a lactam on one side and a polyamine and a polyacid on the other side. Exemplary polymers are polyamide 6, polyamide 6/9, polyamide 6/10, polyamide 6/12, polyamide 11, polyamide 12, polyamide 6/12, polyamide 6/66, polyamide 66/6/10, modifications thereof and blends thereof. Said term also includes crystalline or partially crystalline, aromatic or partially aromatic polyamides.

As used herein, the expressions "inner layer" and "internal layer" refer to a layer of the film having both of its principal surfaces directly adhered to another layer of the film.

As used herein, the expressions "outer layer" or "external layer" refer to a layer of the film having only one of its principal surfaces directly adhered to another layer of the film.

As used herein, the phrase "adheres", as applied to layers, refers to adhesion of the subject layer to the object layer by direct contact with each other, without a tie layer, an adhesive, or other layer therebetween.

As used herein, the expressions "sealant layer" or "heat sealable layer" refer to the outer layer of the film which is involved in the heat sealing of the film to itself, to another film, or to another article, e.g. a container. Heat sealing can be performed by any one or more of a wide variety of manners, such as for example melt bead sealing, thermal sealing, impulse sealing, ultrasonic sealing, hot air, hot wire, infrared radiation etc.

As used herein, the term "extrusion" refers to the process of forming continuous shapes by forcing a molten plastic material through a die, followed by cooling or chemical hardening. Immediately prior to extrusion through the die, the relatively high-viscosity polymeric material is fed into a rotating screw of variable pitch, i.e., an extruder, which forces the polymeric material through the die.

As used herein, the term "coextrusion" refers to the process of extruding two or more molten thermoplastic polymers through a single die with two or more orifices arranged so that the extrudates merge and weld together into a laminar structure before chilling, i.e., quenching. Coextrusion can be employed in film blowing and extrusion coating processes.

As used herein, the term "coextruded film" refers to a film obtained, either fully or partially, by coextrusion.

As used herein, the term "extrusion coating" refers to processes by which a "*coating*" of molten polymer(s), comprising one or more layers, is extruded onto a solid "*substrate*" in order to coat the substrate with the molten polymer coating to bond the substrate and the coating together, thus obtaining a complete film.

As used herein, the term "orientation" refers to the "solid state orientation", namely to the process of stretching of the cast film carried out at a temperature higher than the Tg (glass transition temperatures) of all the resins making up the layers of the structure and lower than the temperature at which all the resins making up the layers of the structure are in the molten state. The solid-state orientation may be mono-axial, transverse or, preferably, longitudinal, or, preferably, bi-axial.

The phrase "orientation ratio in machine (or longitudinal) direction or in transverse direction" refers to the number of times the film has been oriented in that direction in relation to its original size. For example, if a film has been oriented to three times its original size in the longitudinal direction, the orientation ratio in longitudinal direction is 3:1.

As used herein, the phrases "longitudinal direction" or "machine direction", refer to a direction "along the length" of the film, i.e., in the direction of the film as the film is formed during coextrusion.

As used herein, the phrase "transverse direction", refers to a direction across the film, perpendicular to the machine or longitudinal direction.

As used herein the phrases "heat-shrinkable," "heat-shrink," and the like, refer to the tendency of the solid-state oriented film to shrink upon the application of heat, such that the size of the film decreases while the film is in an unrestrained state.

As used herein, the term "support" refers to any object suitable for supporting and possibly containing a product. The support may be flat or hollow. The support may be rigid, semi-rigid or flexible. Suitable examples of supports are, for instance, a tray, a bowl, a dish, a box, a flat support. A hollow support which can contain a product is herein referred to as a "container".

Supports are optionally provided with a sealing area, such as a sealing flange, suitable for being sealed to the sealant layer of a film.

As used herein the term "flexible container" refers to a container obtainable by heat-sealing a single piece of film in the form of an envelope, a bag or a pouch or by heat sealing two identical or different films. Bags or pouches include, for example: lay-flat, end-seal bags made from a seamless tubing and having an open top, first and second folded side edges, and an end seal across a bottom of the bag; lay-flat side seal bags made from a seamless tubing and having an open top, a folded bottom edge and first and second side seals; lay flat, V-shaped side seal bags made from a seamless tubing and having an open top, a folded bottom edge and first and second side seals, which may be completely angled with respect to the open top, thus providing a triangular bag or partially straight (i.e. perpendicular to the open top) and partially angled, thus providing a trapezium-like shape; lay flat pouches made by heat sealing two flat films to one another, the pouch having an open top, a first side seal, a second side seal and a bottom seal.

As used herein, the terms "lid" or "lidding film" refer to a film for closing the opening of a (semi)rigid container and/or for enclosing a product contained in or supported on a support.

### Description of drawings

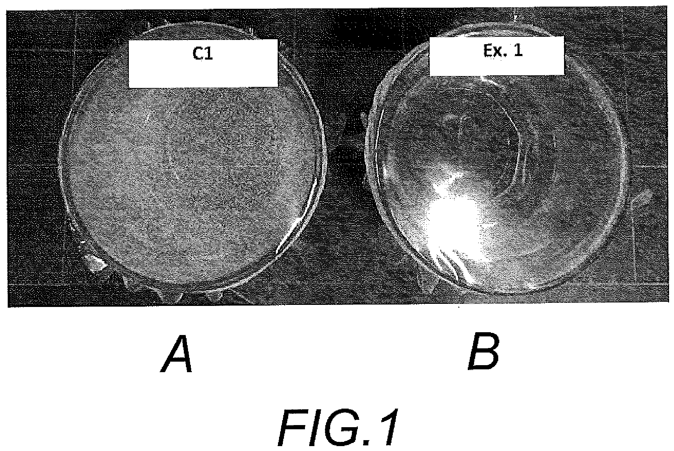

Figure 1 is a picture showing the difference between a polyester film without antifog (completely fogged, referred to as A) and an antifog film according to the present invention (not fogged, referred to as B). The picture shows two glass vessels filled with water and sealed with the films, after 1 hour in a cooler at 2-4°C.

### Detailed description of invention

A first object of the present invention is an antifog, optionally coextruded, multilayer film comprising:
1) an outer sealant layer comprising a major proportion of one or more polyesters;
2) an inner layer comprising at least one optionally modified polyolefin and/or at least one ethylene (meth)acrylate/(meth)acrylic acid copolymer and at least one antifog agent;
3) an outer layer, preferably comprising one or more polyesters.

The film of the invention may have 3 or more layers, preferably between 3 and 10, more preferably between 3 and 6, even more preferably it may have 3 or 4 layers.

In an embodiment, one or more layers can be interposed between layer 1) and layer 2). However, in a preferred embodiment layer 2) directly adheres to layer 1).

The total thickness of the film of the invention may vary within wide limits. It is preferably between 5 and 100 microns, preferably between 8 and 80 microns, more preferably between 10 and 50 microns, even more preferably between 12 and 35 microns, still more preferably between 15 microns and 33 microns, for example 17 microns or 27 microns.

Preferably, the sealant layer 1) has a thickness comprised between 0.5 and 10 microns, preferably between 1 and 6 microns, more preferably between 2 and 5 microns.

Preferably, layer 2) has a thickness comprised between 1 and 15 microns, preferably between 2 and 10 microns, more preferably between 3 and 6 microns.

Preferably, layer 3) has a thickness comprised between 1 and 60 microns, more preferably between 2 and 40 microns, more preferably between 3 and 20 microns.

When the film of the present invention is oriented, it may be mono or biaxially oriented, preferably it is biaxially oriented. The orientation ratio can be preferably comprised between about 2:1 and about 6:1, more preferably between about 3:1 and about 5:1 in both longitudinal and transverse direction. The film according to the invention may be heat shrinkable or not, preferably it is heat shrinkable. A heat shrinkable film has a percentage of free shrink at 120°C of at least 1%, 5%, 10%, 15% in longitudinal and/or transverse direction, measured in oil according to ASTM D 2732.

In the film according to the invention, the outer sealant layer 1) comprises a major proportion of one or more polyesters, i.e. more than 50% by weight of one or more polyesters.

In an embodiment, the sealant layer 1) is substantially made of polyesters: preferably, layer 1) comprises at least 60 wt%, preferably at least 70 wt%, more preferably at least 80 wt%, even more preferably at least 85 wt%, still more preferably at least 90 wt%, at least 95 wt%, at least 98 wt%, of one or more polyesters. The sealant layer 1) may also consist of one or more polyesters.

The composition of the sealant layer 1) may be any polyester composition known in the art suitable for obtaining a heat seal when the film of the invention is sealed to itself to form a flexible container or is sealed to a container, preferably a polyester container.

In an embodiment, said polyesters are polyesters of aromatic dicarboxylic acids, more preferably of terephtalic acid.

In an embodiment, said polyesters are copolyesters, preferably polyethylene terephthalate copolymers.

In an embodiment, the sealant layer 1) comprises at least one amorphous polyester, preferably comprises a major proportion of at least one amorphous polyester, more preferably comprises an amount of at least one amorphous polyester of at least 70 wt%, at least 80 wt%, at least 90 wt%, at least 95 wt%, at least 98 wt%. In an embodiment, the sealant layer 1) consists of at least one amorphous polyester.

In an embodiment, the sealant layer 1) comprises at least one glycol-modified polyester, preferably comprises a major proportion of at least one glycol-modified polyester, more preferably comprises an amount of at least one glycol-modified polyester of at least 70 wt%, at least 80 wt%, at least 90 wt%, at least 95 wt%, at least 98 wt%. In an embodiment, the sealant layer 1) consists of at least one glycol-modified polyester.

In an embodiment, such at least one glycol-modified polyester may be a glycol-modified poly(ethylene terephthalate) copolymer (PETG).

In an embodiment, the sealant layer 1) comprises a mixture of at least one polyethylene terephthalate copolymer and at least one glycol-modified polyethylene terephthalate copolymer (PETG).

In an embodiment, the sealant layer 1) may also comprise at least one (semi)crystalline polyester: preferably, the at least one (semi)crystalline polyester is present in the sealant layer 1) in a minor wt% proportion in respect to the total weight of layer 1). However, also embodiments where the sealant layer 1) comprises a major wt% proportion of at least one (semi)crystalline polyesters in respect to the total weight of layer 1) are encompassed as well.

Examples of suitable amorphous copolyesters for use in layer 1) of the film of the invention are Eastobond 19412 (PET) or GN001 (PETG) by Eastman Chemical or Vitel 1916NSB-P (PET) by Bostik.

In the film according to the invention, the inner layer 2) comprises at least one optionally modified polyolefin and/or at least one ethylene (meth)acrylate/(meth)acrylic acid copolymer and at least one antifog agent.

In an embodiment, said at least one optionally modified polyolefin can be selected from the group consisting of ethylene polymers, propylene polymers, butylene polymers, and mixtures thereof.

The butylene polymers are preferably butylene copolymers, more preferably are butylene alpha olefin copolymers.

The propylene polymers are preferably propylene copolymers, more preferably are propylene alpha olefin copolymers.

The ethylene polymers are preferably ethylene copolymers, more preferably are ethylene alpha olefin copolymers, even more preferably are ethylene (C₄-C₁₀) alpha olefin copolymers. In a particularly preferred embodiment, they are linear low density polyethylene (LLDPE).

In an embodiment, the at least one polyolefin can be a modified polyolefin, in particular it can be an anhydride-modified polyolefin, for example a maleic anhydride-modified polyolefin.

In an embodiment, the ethylene alpha olefin copolymers are preferably modified ethylene alpha olefin copolymers, more preferably they are anhydride-modified ethylene alpha olefin copolymers, more preferably maleic anhydride-modified ethylene alpha olefin copolymers.

In a particularly preferred embodiment, the modified ethylene alpha olefin copolymers are anhydride modified ethylene (C₄-C₁₀) alpha olefin copolymers, more preferably anhydride-modified LLDPE, and even more preferably maleic anhydride-modified LLDPE.

Suitable non-modified polyolefins are for example the products commercialized under the tradenames Dowlex 2045S by Dow or EVOLUE SP2040 by Mitsui Chemical.

Suitable maleic anhydride-modified ethylene alpha olefin copolymers are for example the anhydride modified linear low density polyethylenes commercialized under the tradenames ADMER NF927E, ADMER NF911E, ADMER NF912E or ADMER NF518E by Mitsui Chemical or Bynel 4104 by DuPont.

In an embodiment, the ethylene (meth)acrylate/(meth)acrylic acid copolymers are ethylene/methacrylic acid copolymers.

In an embodiment, the ethylene (meth)acrylate/(meth)acrylic acid copolymers are ethylene/methacrylate copolymers.

In an embodiment, the ethylene (meth)acrylate/(meth)acrylic acid copolymers are a mixture of ethylene/methacrylic acid copolymers and ethylene/methacrylate copolymers.

An example of a suitable ethylene methacrylate copolymer is the product commercialized under the tradename Elvaloy 1820 AC by Dupont.

In an embodiment, the ethylene (meth)acrylate/(meth)acrylic acid copolymers are modified, preferably they are anhydride-modified, more preferably they are maleic anhydride-modified ethylene (meth)acrylate/(meth)acrylic acid copolymers. Maleic anhydride-modified ethylene/methyl acrylate copolymers are particularly preferred. An example of suitable maleic anhydride-modified ethylene-methyl acrylate copolymer is commercialized by DuPont under the tradename BYNEL CXA 21E787.

In another embodiment, the ethylene (meth)acrylic acid copolymers can be neutralized, i.e. can be ionomers. Preferably, the neutralizing ion is zinc, more preferably it is sodium.

In an embodiment, layer 2) comprises from about 20 wt% to about 100 wt%, preferably from about 25 wt% to about 85 wt%, more preferably from 30 wt% to about 50 wt% of a mixture of at least one antifog agent and at least one, optionally modified polyolefin and/or at least one ethylene (meth)acrylate/(meth)acrylic acid copolymer.

Layer 2) can consist of said mixture, if said mixture comprises at least one modified polyolefin and/or at least one ethylene (meth)acrylate/(meth)acrylic acid copolymer. In fact, modified polyolefins and ethylene (meth)acrylate/(meth)acrylic acid copolymers work as adhesive resins which allow layer 2) to adhere to the polyester comprising layer 1).

Advantageously, the at least one antifog agent and at least one optionally modified polyolefin and/or at least one ethylene (meth)acrylate/(meth)acrylic acid copolymer can be mixed to form a masterbatch to be supplied to the extruder, the optionally modified polyolefin(s) and/or the ethylene (meth)acrylate/(meth)acrylic acid copolymer(s) working as the carrier resin for the antifog agent(s).

For example, the following masterbatches may be used: AF5841LL 1.5 Percent Sylobloc 47 As AB from Tosaf, wherein the carrier resin is LLDPE, or Conpol 10AF from DuPont, wherein the carrier resin is ethylene-methacrylic acid.

In order to favor layer adherence between layer 2) and the polyester comprising layer 1), layer 2) should comprise at least a resin which works as an adhesive (tie) resin.

Any tie resin suitable to favor adherence to polyesters is suitable to be comprised in layer 2) of the film of the invention. Examples of resins working as tie resins are modified polyolefins, such as modified ethylene alpha olefin copolymers, ethylene (meth)acrylate/(meth)acrylic acid copolymers and anhydride modified ethylene (meth)acrylate/(meth)acrylic acid copolymers, which have been described above. In addition, ethylene vinyl acetate copolymers (EVA) are also suitable as tie resins. Ethylene vinyl acetate (EVA) copolymers can be selected within ethylene/vinyl acetate/carbon monoxide copolymers, preferably with a comonomer content between 5 and 25 wt%, preferably between 6 and 20 wt%, for example 18%.

A suitable ethylene vinyl acetate copolymer for use as tie resin in layer 2) is the product commercialized under the tradename Elvaloy 741 by DuPont.

Layer 2) can comprise any mixture of polyolefins, modified polyolefins, such as modified ethylene alpha olefin copolymers, ethylene (meth)acrylate/(meth)acrylic acid copolymers, anhydride modified ethylene (meth)acrylate/(meth)acrylic acid copolymers, and ethylene vinyl acetate copolymers (EVA).

In an embodiment, layer 2) comprises a major proportion, preferably at least 60 wt% of resin(s) selected from modified polyolefins, such as modified ethylene alpha olefin copolymers, ethylene (meth)acrylate/(meth)acrylic acid copolymers, anhydride modified ethylene (meth)acrylate/(meth)acrylic acid copolymers, ethylene vinyl acetate copolymers (EVA) and mixtures thereof.

In a preferred embodiment, layer 2) consists of about 70 wt% of an ethylene/methacrylate copolymer (EMA), and about 30 wt% of a masterbatch of a non-modified polyolefin and an antifog agent. Preferably, the ethylene/methacrylate copolymer is a maleic anhydride-modified ethylene/methyl acrylate copolymer. Preferably, the polyolefin is polyethylene, more preferably it is LLDPE.

In another preferred embodiment, layer 2) consists of about 50 wt% of an ethylene/methacrylate copolymer (EMA), and about 50 wt% of a masterbatch of an ethylene-methacrylic acid and an antifog agent.

In an embodiment, the resins in layer 2) have a melt flow rate (measured at 190°C / 2.16 kg in accordance with ASTM 1238) comprised between about 1 and about 6 g/10 min.

In particular, when the film is manufactured through a flat coextrusion process, resins with a melt flow rate of about 4-5 g/10 min are preferred; these melt flow rates are comparable to those of the polyesters of layer 1), which improves this type of manufacturing process. When the film is manufactured through a round coextrusion process, also resins with a melt flow rate of about 1-2 g/10 min are suitable.

Antifog agents are known in the art and mainly fall into classes such as esters of aliphatic alcohols, polyethers, polyhydric alcohols, esters of polyhydric aliphatic alcohols, poly-ethoxylated aromatic alcohols, polyhydric alcohol fatty acid esters, hydrophilic fatty acid esters, polyethoxylated aromatic alcohols, nonionic ethoxylates, higher fatty acid amines, higher fatty acid amides, polyoxyethylene ethers of higher fatty alcohols and ethylene oxide adducts of higher fatty acid amines or amides. Examples of antifog agents are polyoxyethylene, sorbitan monostearate, polyoxyethylene sorbitan monolaurate, polyoxyethylene monoplalmitate, polyoxyethylene sorbitan tristearate, polyoxyethylene sorbitantrioleate, poly(oxypropylene), polyethoxylated fatty alcohols, polyoxyethylated 4-nonylphenol, polyhydric alcohol, propylene diol, propylene triol, ethylene diol, monoglyceride esters of vegetable oil or animal fat, mono- and/or diglycerides such as glycerol mono- and dioleate, glyceryl stearate, monophenyl polyethoxylated, sorbitan monolaurate, and the like. Examples of antifog agents are ethoxylated sorbitan derivatives with higher fatty acids such as those marketed under the trade name of Tweens or polysorbates, preferably with fatty acids from C14 to C24, for example Atmer 116 commercialized by Croda.

In an embodiment, the total amount of antifog agent(s) in layer 2) is comprised between 0.1 wt% and 5 wt% with respect to the total weight of layer 2), preferably between 0.2 wt% and 3 wt %, more preferably between 0.3% and 2 wt%.

The film according to the invention comprises, opposite to the sealant layer 1), an outer layer 3), which preferably comprises one or more polyesters.

In an embodiment, the outer layer 3) comprises at least 60% wt%, preferably at least 70 wt%, more preferably at least 80 wt%, even more preferably at least 85%, still more preferably at least 90 wt%, at least 95 wt%, at least 98 wt%, of one or more polyesters. The outer layer 3) may also consist of one or more polyesters.

In an embodiment, said polyesters are polyesters of aromatic dicarboxylic acids, more preferably of terephtalic acid.

In an embodiment, said polyesters are copolyesters, more preferably polyethylene terephthalate copolymers.

In an embodiment, the outer layer 3) comprises at least one (semi)crystalline polyester, preferably comprises a major proportion of a (semi)crystalline polyester. In an embodiment, the outer layer 3) comprises at least 80 wt% of (semi)crystalline polyesters, preferably at least 90 wt%, more preferably at least 95 wt%, even more preferably at least 98 wt%.

In an embodiment, the outer layer 3) consists of (semi)crystalline polyesters. In another embodiment, layer 3) comprises a blend of (semi)crystalline and amorphous polyesters. For example, the outer layer 3) can comprise between 0.5 and 10 wt%, more preferably between 1 and 5 wt%, even more preferably about 2 wt% of amorphous polyesters.

A suitable amorphous copolyester for use in the outer layer 3) of the film of the invention is for example the product commercialized under the tradename Sukano G Dc S503 by Sukano, which also comprises slip/antiblock agents.

A suitable (semi)crystalline polyester for use in the outer layer 3) of the film of the invention is for example the product commercialized under the tradename Ramapet N180 by Indorama or Eastapack copolyester 9921 by Eastman Chemical.

Outer layers 3) comprising at least 80 wt%, at least 85%, at least 90 wt%, at least 95 wt%, at least 98 wt%, of one or more polyesters are particularly preferred.

Nonetheless, in an embodiment, the outer layer 3) may also comprise one or more polyolefins. Preferably, said one or more polyolefins are selected from ethylene polymers, propylene polymers and mixtures thereof.

The propylene polymers are preferably propylene copolymers; the ethylene polymers are preferably ethylene copolymers, more preferably ethylene alpha olefin copolymers, even more preferably are ethylene (C₄-C₁₀) alpha olefin copolymers.

Polyethylene, polypropylene and mixtures thereof are particularly preferred polyolefins for outer layer 3).

In an embodiment, the outer layer 3) comprises at least 60% wt%, preferably at least 70 wt%, more preferably at least 80 wt%, even more preferably at least 90 wt%, at least 95 wt%, at least 98 wt%, of one or more polyolefins. The outer layer 3) may also consist of one or more polyolefins.

In another embodiment, layer 3) may also comprise one or more polyamides. Such polyamides may be homopolymers and/or copolymers. Polyamide homopolymers include for example nylon 6 (polycaprolactam), nylon 11 (polyundecanolactam), nylon 12 (polylauryllactam), and the like. Other polyamide homopolymers also include nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene dodecanediamide), nylon 7,7 (polyheptamethylene pimelamide), nylon 8,8 (polyoctamethylene suberamide), nylon 9,9 (polynonamethylene azelamide), nylon 10,9 (polydecamethylene azelamide), nylon 12,12 (polydodecamethylene dodecanediamide), and the like. Polyamide copolymers include nylon 6,6/6 copolymer (polyhexamethylene adipamide/caprolactam copolymer), nylon 6/6,6 copolymer (polycaprolactam/hexamethylene adipamide copolymer), nylon 6,2/6,2 copolymer (polyhexamethylene ethylenediamide/hexamethylene ethylenediamide copolymer), nylon 6,6/6,9/6 copolymer (polyhexamethylene adipamide/hexamethylene azelaiamide/caprolactam copolymer). Additional polyamides include nylon 4,1, nylon 6,1, nylon 6,6/6I copolymer, nylon 6,6/6T copolymer, MXD6 (poly-m-xylylene adipamide), nylon 6T/6I copolymer, nylon 6/MXDT/I copolymer, nylon MXDI, poly-p-xylylene adipamide, polyhexamethylene terephthalamide, polydodecamethylene terephthalamide and the like.

In an embodiment, the outer layer 3) comprises at least 60% wt%, preferably at least 70 wt%, more preferably at least 80 wt%, even more preferably at least 90 wt%, at least 95 wt%, at least 98 wt%, of one or more polyamides. The outer layer 3) may also consist of one or more polyamides.

Particularly preferred polyamides are ULTRAMID C33 L 01 supplied by BASF (PA6/66), Terpalex (PA6/66/12), Ube 503X family grades by Ube (PA6/66), and Grilon and Grivory by EMS (PA6I/6T).

In an embodiment, the outer layer 3) can comprise any combination of polyesters, polyolefins, polyamides. When two or more of said resins is present in outer layer 3), combinations comprising at least 60 wt%, preferably at least 70 wt%, more preferably at least 80 wt%, even more preferably at least 90 wt% of polyesters are particularly preferred.

In an embodiment, the film of the invention may comprise, further to layers 1), 2) and 3) listed above, also one or more additional layers to provide the film with specific physical and/or mechanical properties. The additional layer(s) may be of the same polymer(s) or different polymer(s) in respect to each other or to one or more of layers 1), 2) and 3).

In an embodiment, the film of the invention may comprise a layer 2'), positioned between layer 2) and layer 3) and directly adjacent to layer 2). Layer 2') also comprises at least one optionally modified polyolefin and/or at least one ethylene (meth)acrylate/(meth) acrylic acid copolymer and at least one antifog agent. The embodiments described above in regard to layer 2) also apply to layer 2').

The composition of layer 2) and layer 2') can be the same or different. Preferably, the antifog agent present in layer 2) and in layer 2') is the same.

When two layers 2) and 2') are present in the film, layer 2'), which is the innermost of the two (in respect to the sealant layer) works as a reservoir for the antifog agent supplying such agent to layer 2), from which it migrates to the external surface of layer 1), i.e. the surface of layer 1) which does not adhere to layer 2).

When layers 2) and 2') are present, no additional layers are interposed between them.

The film may comprise a barrier layer to reduce the permeability to gases of the film; barrier layers generally comprise polymers such as ethylene vinyl alcohol copolymers (EVOH), polyvinylidene chloride (PVDC), polyamides, polyesters. The film of the invention may also comprise one or more bulk layers and/or one or more abuse layers to provide an improved mechanical strength. These layers generally comprise polyester and/or polyamides. Furthermore, the film of the invention may also comprise one or more tie layers to provide increased adherence between other layers of the film.

In an embodiment, the film of the invention may comprise a polyester bulk layer, adjacent to at least one of layer 2) (or layer 2') if present) and layer 3), preferably adjacent to both layer 2) (or layer 2') if present) and layer 3). The composition of such bulk layer may be the same as or different from the composition of layer 3).

Preferably, the overall composition of the film of the invention comprises at least 50 wt%, preferably at least 60 wt%, more preferably at least 70 wt% of polyesters. Preferably, said polyesters are polyesters of aromatic dicarboxylic acids, more preferably of terephtalic acid.

Preferably, in order to improve the machinability and the processing of the film of the invention in a high speed packaging equipment, slip and/or anti-blocking additives may be added, preferably to one or both of the outer layers 1) and 3). These additives may advantageously be added in the form of a concentrate in a polyester carrier resin, thus forming a masterbatch. The amount of carrier is typically in the order of 0.1 - 5% of the total weight of the layer.

The inventors of the present invention believe that migration of the antifog agent from layer 2) to the external surface of layer 1) depends mainly on two factors: the first factor is the thickness of the sealant layer 1): if this layer is too thick, the migration of the antifog agent to reach the external surface of the layer can be slowed down or even prevented, totally or in part, because of the presence of the polyesters in such layer 2), which entrap it. The second factor is the thickness ratio between layer 1) (and possible further layers interposed between layers 1) and 2)) and layer 2). For example, the thickness ratio between layer 1) (and possible further layers interposed between layers 1) and 2)) and layer 2) can be preferably comprised between 1:1.1 and 1:4, more preferably between 1:1.3 and 1:2.5, even more preferably between 1:1.5 and 1:2.

In one embodiment, the thickness of layer 2) can advantageously be higher than the total thickness of layer 1) (and possible further layers interposed between layers 1) and 2)), in order to favour the migration of the antifog agent from layer 2) through layer 1).

Nonetheless, in another embodiment, the thickness of layer 2) can be lower than the total thickness of layer 1) (and possible further layers interposed between layers 1) and 2)); this may occur, for example, if layer 2) comprises a high amount of antifog agent (for example, an amount higher than 3 wt%) or if an additional layer 2') is present. Both these cases result in a facilitated migration of the antifog agent through layer 1).

As will be demonstrated in the experimental section, and as it appears from Figure 1, the films according to the invention show a good to excellent antifog effect. Moisture coming from the packaged product condensates on the surface of the film facing the product forming a uniform layer or very large uniform areas. Anyway, no fog appears on the surface of the film and this results in good see-through properties and the possibility to visually inspect the packaged product.

Furthermore, the film of the invention has good optical properties in terms of haze, clarity and gloss. The good optical properties favor even more the visual inspection of the packaged product.

In addition, the film of the invention has good sealant properties and seal strength. The presence of the antifog agent migrating from layer 2) to the external surface of the sealant layer 1) does not interfere with the sealing capabilities of this layer.

The film according to the first object of the present invention may be coextruded. In particular, the film may be manufactured by processes well known in the art such as flat or round co-extrusion, optionally followed by mono- or bi-orientation, performed by flat, sequential or simultaneous tenterframe orientation or by trapped bubble orientation on Double or Triple Bubble lines, respectively.

In coextrusion, at least the polyester-comprising composition of the sealant layer 1), the antifog-comprising composition of layer 2) and the polyester-comprising composition of layer 3) are extruded simultaneously through an extrusion die.

Preferably, the film is fully coextruded, i.e. the blends of all the layers of the film are extruded simultaneously.

Preferably, coextrusion is carried out by means well known in the art, for example using a flat or a circular film die that allows shaping the polymer melt into a flat tape or a film tubing, wherein each of the blends of the different layers of the film are extruded simultaneously through the extrusion die.

The film of the present invention, co-extruded as described above, is, optionally oriented through a round or flat film orientation process that produces a monoaxially, preferably biaxially oriented film.

In details, in case the multilayer film is co-extruded through a circular extrusion die, the tube of molten polymers so obtained (tape) is quenched immediately after extrusion without being expanded, optionally cross-linked, then heated to a temperature which is above the Tg of all the resins employed and below the melting temperature (Tm) of most (preferably all) of the resins employed, typically by passing it through a hot water bath or heating it with an IR oven or with hot air, and expanded, still at this temperature, by internal air pressure to get the transverse orientation and/or by a differential speed of the pinch rolls which hold the thus obtained "trapped bubble" to provide the machine or longitudinal orientation. An example of equipment suitable for this technique is disclosed in US4841605.

Otherwise, the multilayer film according to the present invention may be obtained by flat coextrusion through a slot die, followed by optional orientation by heating the sheet to its softening temperature but below its melt temperature and by stretching in the solid state with a simultaneous or a sequential tenterframe process. While the simultaneous tenterframe process provides only biaxially oriented sheets, a sequential tenterframe process allows to obtain either biaxially oriented sheets and mono-axially oriented (MD or TD) sheets. The film is then rapidly cooled to somehow freeze the molecules of the film in their oriented state and wound.

In case of oriented films, while orientation is typically carried out in both machine and transverse directions, mono-oriented films or films preferentially/exclusively oriented in one direction can be obtained by controlling/avoiding transverse or machine orientation.

Furthermore, in some instances it may be desirable to submit the oriented structure to a controlled heating-cooling treatment, called "annealing" or "heat-setting", that is aimed at having a better control on low temperature dimensional stability of the film.

Typical orientation temperatures for the present films range from 90° to 180°C, more preferably from 95° to 120°C.

Typical heat setting temperatures for the present films range from 60°C to 260°C, preferably between 80°C and 250°C.

Preferably, the film according to the first object of the invention is manufactured by flat co-extrusion, optionally followed by tenterframe orientation. In an embodiment, tenterframe orientation is simultaneous. In another embodiment, tenterframe orientation is sequential.

Preferably, the process to manufacture the film of the invention comprises the steps of:
a) co-extruding at least layers 1), 2) and 3) to obtain a multilayer film,
b) optionally orienting, in at least one of the machine (MD) and/or transverse directions (TD), preferably in both, the multilayer film obtained from step a),
c) optionally heat-setting the oriented film obtained from step b).

In an embodiment, step a) is performed by flat coextrusion.

In an alternative embodiment of the above process, step a) is performed by round coextrusion.

In an embodiment, the antifog agent and the at least one optionally modified polyolefin and/or at least one ethylene (meth)acrylate/(meth)acrylic acid copolymer of layer 2) can be advantageously supplied to the extruder in the form of a masterbatch.

In an embodiment, the antifog agent and all the resins of layer 2) are supplied to the extruder in the form of a masterbatch.

In an embodiment, orientation in step b) may occur in one direction (longitudinal or transverse). In another embodiment, orientation in step b) may occur in both directions. Preferably, orientation occurs in both directions (biaxial orientation). In an embodiment, the orientation ratio can be comprised between about 2:1 and about 6:1, more preferably between about 3:1 and about 5:1 in both longitudinal and transverse direction.

The film according to the first object of the present invention may also be manufactured by extrusion-coating. In extrusion-coating, a coating is extruded onto a solidified substrate, the coating and the substrate bond together and a complete film is obtained. Both the coating and the substrate can be mono-layer or multi-layer. Extrusion-coating is a technique well-known in the art.

In case the film of the invention is manufactured by extrusion-coating, in an embodiment the coating may consist of layer 1). In another embodiment, the coating may consist of layer 1) and layer 2). In a further embodiment, the coating may consist of layers 1), 2) and 2').

A third object of the present invention is a thermoformed support obtainable by thermoforming a film according to the first object of the invention. In such thermoformed support, the sealant layer of the film of the invention forms the surface of the support that will come into contact with or face a supported product.

Thermoforming is well known in the art, for example, it is described in Modern Plastic Encyclopedia, 1984-1985, at pages 329-336.

In thermoforming, in general, a film in the form of a flat sheet is heated until the thermoplastic material is sufficiently softened and then placed over a mould, typically made of aluminum. The heated film is then forced towards the surface of the mould by vacuum, air pressure and/or direct mechanical force, so that it assumes the shape of the mould. The film is then cooled while being held against the mould and thus originates a thermoformed shaped product which is ejected from the mould.

Accordingly, a package can be manufactured which comprises the thermoformed support according to the third object of the invention, a product placed on the support, and a lid, which is hermetically sealed all around onto said support, thus enclosing the product. The lid can preferably have a polyester sealant layer which is sealed onto the support, more preferably it can be a film according to the invention.

A fourth object of the present invention is a flexible container obtainable by heat-sealing a film according to the first object of the invention on itself or by heat sealing two films, of which at least one is a film according to the first object of the invention. In such flexible container, the sealant layer of the film(s) of the invention faces the inside of the container.

Preferably, the flexible container is in the form of a bag or a pouch.

Any conventional method for making bags and pouches known in the art may be readily adapted to make flexible containers from the multilayer film according to the present invention.

A fifth object of the present invention is a lidded package comprising a support, a product placed on the support, and a lid comprising the film according to the first object of the present invention (lidding film). In such lidded package, the sealant layer of the film is in contact with, or faces, the product. The film is hermetically sealed all around onto said support, thus enclosing the product.

In a preferred embodiment, the support is a container, more preferably a tray. In this case (i.e. the so-called "tray lidding" applications), the film is sealed onto a continuous peripheral rim extending all around the container.

Typically, the surface of the support in contact with the product, i.e. the surface involved in the formation of the seal with the lidding film, comprises a polyester resin, usually an amorphous polyester resin. For instance, the support can be made of cardboard coated with polyester or it can be integrally made of a polyester resin. Examples of suitable materials of which the support of the package according to this object of the invention can be made are CPET, APET, APET/CPET, either foamed or not-foamed, i.e. solid.

The support can be pre-made or thermoformed, preferably in line. According to a preferred embodiment, the support is thermoformed, preferably, it is a thermoformed support comprising the film according to the first object of the invention. More preferably, the support is a thermoformed support consisting of the film according to the first object of the invention, i.e. it is a thermoformed support according to the third object of the invention. In this preferred embodiment where both the thermoformed support and the lidding film are made of films of the invention, both the sealant layer of the thermoformed support and of the lidding film are directed toward the product.

In an embodiment, the support can comprise a liner, comprising or preferably consisting of the film according to the first object of the invention, wherein the liner is applied at least to the surface (or to a portion thereof) of the support contacting or facing the product. In this embodiment, the sealant layer of the film of the invention is in contact with, or faces, the product.

The lidded package according to the fifth object of the invention is produced by techniques well known to those skilled in the art.

For example, once the food to be packaged has been placed on the support, or in the container, the film according to the first object of the invention is placed on the support or container such that its sealant layer is in contact with the surface of the support or with the rim or the peripheral lip/flange of the container. The film is then sealed to the support by means of temperature and/or pressure using conventional techniques and equipment.

Sealing is generally carried out by means of a heated frame at temperatures of from 100°C to 180°C, preferably from 110°C to 160°C, more preferably from 120°C to 150°C, at a pressure of 2 to 10 bar, preferably 4 to 8 bar. Sealing times are typically in the order of 0.3 to 2.0 seconds, 0.5 to 1.0 seconds.

For example, the support with the product loaded therein is brought into a lid sealing station, which comprises a lower chamber and an upper chamber, and a web of the film of the invention is provided over the top of the support. The lower chamber and the upper chamber are then closed together, the air in-between the support and the lidding film is optionally replaced by a suitable gas or gas admixture, with or without prior air evacuation, and then the lidding film of the invention is sealed to the surface of the support or to the rim or the peripheral lip/flange of the container by means of the combination of a heated frame or plate above the lidding film and a similarly framed anvil supporting the support, that are pressed together. The lidding film is cut almost at the same time as the lid is sealed and, in case of shrinkable lids, shrinkage of the lid in the package which typically occurs at the same time as the heat of the sealing elements in the lidding station is sufficient to get the desired shrinkage. However, a further heat shrinking step may be added in case of need.

Lidding machines that can be suitable for tray lidding process include for instance Proseal GTO Tooling 1218 OC, Multivac 400 and Multivac T550 by Multivac Sep. GmbH, Mondini Trave, E380, E390 or E590 by Mondini S.p.A., Ross A20 or Ross S45 by Ross-Reiser, Mecaplastic 1000, Meca-2002 or Meca-2003 by Mecaplastic, the tray lidding machines of Sealpac and similar machines.

The optional replacement of air by a suitable gas or gas admixture is performed depending on the specific needs of the product to be packaged and typically is performed for products like fruits and vegetables, fresh meat, processed meat.

A sixth object of the present invention is a wrapped package comprising a product, optionally placed on a support, and a film according to the first object of the invention wrapped around said product or around both the product and the support, wherein the sealant layer of the film is in contact with or faces the product.

Preferably, said wrapped package is hermetic. In said wrapped hermetic package, the film of the first object of the invention is sealed to itself. Preferably, the film in said wrapped hermetic package is sealed to itself along a longitudinal seal and two transverse seals, to give a pouch.

For instance, a wrapped hermetic package can be obtained by a flowpack packaging method by means of a Horizontal Form-Fill-Seal (HFFS) machine.

In details, such method conventionally comprises:
a) providing the film according to the present invention,
b) running the film through a former thus forming a tube,
c) inserting a product, optionally placed in a container or onto a support, into the tube,
d) sealing the tube longitudinally,
e) sealing and cutting the tube transversally at the beginning and at the end of the package, optionally gas-flushing or vacuumizing the tube before closing it, and
f) optionally, heat shrinking the package.

In a flowpack packaging method the product, typically in a container like a tray, is wrapped into an envelope made from a film of the present invention, preferably under a suitable and predetermined atmosphere. To create the envelope, the flat film is first folded around a former and longitudinally sealed to form a tube. The container with the product is placed in such a tube where the leading edge has been closed and gas flushed with the suitably selected gas or gas mixture. The excess gas is generally removed by a gentle pressure on top of the package and the open end of the envelope is then sealed and the package separated from the tubing. In case of a shrinkable film, the loose package is then passed into a shrink tunnel, typically a hot air one set at a temperature suitable for shrinking such as a temperature of 100-150°C, to get shrinkage of the film and thus a tight package. As an alternative, pouches can be made with a Vertical Form Fill Seal (VFFS) packaging system, that has proven to be very useful in packaging a wide variety of flowable products. The VFFS process is known to those of skilled in the art and described for instance in US4589247. A flowable product is introduced through a central, vertical fill tube to a formed tubular film of the invention which has been sealed transversely at its lower end, and longitudinally. The pouch is then completed by sealing the upper end of the tubular segment, and severing the pouch from the tubular film above it. A FFS machine, either Horizontal or Vertical, typically includes a former for forming a flat web of film into a tubular configuration, a longitudinal sealer to seal the overlapped longitudinal edges of the film in the tubular configuration, a conveyor for feeding the products into the tubular film one after the other in suitably spaced configuration, or a feeding tube for soft, fluid or powder products in case of a VFFS machine, and a transverse sealer for sealing the tubular film in a cross-wise direction to separate the products into discrete packages.

Suitable machines for the flowpack process include Ilapak Delta 2000 and 3000 or Ulma Baltic, Artic or Pacific.

A package can also be manufactured, comprising a flexible container according to the fourth object of the invention which encloses a product, wherein the product is optionally placed on a support.

For example, the flexible container may be an optionally shrinkable bag made of the film of the invention; in packaging, the product is loaded into such bag, the bag is generally evacuated, and the open end thereof is closed by heat-sealing or by applying a clip, e.g. of metal. This process is advantageously carried out within a vacuum chamber where the evacuation and application of the clip or heat seal is done automatically. After the bag is removed from the chamber, it can be heat shrunk by applying heat. This can be done, for instance, by immersing the filled bag into a hot water bath or conveying it through a hot water shower or a hot air tunnel, or by infrared radiation. The heat treatment produces a tight wrapping that will closely conform to the contour of the product packaged therein.

Alternatively, the product may be packaged by means of flexible containers e.g. pouches made on form-fill-seal machines, such as a Horizontal Form-Fill-Seal (HFFS) or a Vertical Form-Fill Seal (VFFS) machine, as described above.

In the packages according to the present invention, the product is preferably a food product, preferably a fresh, moist or respiring food product which tend to release moisture into the package. Examples of these products are fruits, vegetables, fresh meat, processed meat, fish and cheese. The packages according to the present invention described above are particularly useful also for ready-prepared foods, so-called "ready-meals", which contain fresh ingredients and tend to release some water in the package. Ready meals are generally cooked or heated in a microwave oven or in a conventional oven. The films of the present invention are suitable to be used also for cooking or heating in both microwave oven and conventional oven.

A seventh object of the present invention is the use of the film according to the first object of the present invention for packaging a product, preferably a food product. Typically, food products which can advantageously be packaged with the film of the invention are moist or respiring food products such as fruits, vegetables, fresh meat, processed meat, fish and cheese, as well as ready meals.

### EXAMPLES

The present invention can be further understood with reference to the following examples that are merely illustrative and are not to be interpreted as a limitation to the scope of the invention.

In the following examples, the polymers indicated in Table 1 below have been employed:

**Table 1**

| Tradename | Supplier | Acronym |
|---|---|---|
| | | |
| RAMAPET N180 | Indorama | PET1 |
| BYNEL CXA 21E787 | DuPont | EMA-md |
| GN001 | Eastman Chemical | PETG1 |
| SUKANO G Dc S503 | Sukano | PETG2 (slip) |
| AF5841LL 1.5 Percent Sylobloc 47 As AB | Tosaf | MB1 |
| Vitel 1916NSB-P | Bostik | PET2 |
| Eastobond 19412 | Eastman Chemical | PET3 |
| Elvaloy 1820 AC | DuPont | EMA |
| Conpol 10AF | DuPont | MB2 |

PET1: Polyethylene Terephthalate. Density 1.4 g/cc, Glass Transition 78°C, Melting Point 245°C, Viscosity intrinsic 0.80 dl/g; (Semi)crystalline.
EMA-md: Maleic Anhydride-Modified Ethylene/Methyl Acrylate Copolymer. Density 0.930 g/cc, Vicat Softening point 52°C, Melting Point 92°C, Melt Flow Rate (190°C/2.16 kg) 1.6 g/10 min.
PETG1: Polyethylene Terephthalate/Glycol. Density 1.27 g/cc, Glass Transition 78°C, Intrinsic Viscosity 0.75 dl/g. Amorphous.
PETG2 (slip): AntiBlock and Slip in Polyethylene Terephthalate/Glycol - Amorphous Silica and Ester Wax. Bulk (Apparent) Density 0,74 g/cc, Density 1.4 g/cc, Moisture Content max 0,5%, Vicat softening point 82°C. Amorphous.
MB1: Antifog masterbatch, fatty acid esters and silica in a linear, low density polyethylene carrier resin. Additives (antifog) 10%, Ash 1.55%, Density (23°C) 0.920 g/cc, Melt Flow Rate (190°C/2.16 kg) 3 g/10 min.
PET2: Polyethylene Terephthalate. Density 1.3 g/cc, Melt Flow Rate (200°C/2.16 kg) 30 g/10 min, Melting Point 145°C.
PET3: Polyethylene Terephthalate. Density 1.3 g/cc, Viscosity (intrinsic) 0.74 dl/g.
EMA: Ethylene-Methyl Acrylate Copolymer. Comonomer content (acrylic acid) 20%, Density 0.942 g/cc, Melt Flow Rate (190°C/2.16 kg) 8 g/10min.
MB2: Antifog masterbatch made from an ethylene-methacrylic acid carrier resin. Density 0.95 g/cc, Melt Flow Rate (190°C/2.16 kg) 22.5 g/10min.

The layers composition of the antifog, multilayer films according to the invention and of a comparative film is indicated in the Table 2 below. In comparative film 1, layer 2 contains polyesters and no antifog agent.

**Table 2**

| Film | Layer | Layer composition | Layer thickness (microns) | Film thickness (microns) |
|---|---|---|---|---|
| Ex 1 | 1 | 98% PETG1 | 2.0 | 17.0 |
| | | 2% PETG2 (slip) | | |
| | 2 | 70% EMA-md | 3.0 | |
| | | 30% MB1 | | |
| | 3 | 60% PET1 | 10.0 | |
| | | 40% PETG1 | | |
| | 4 | 98% PET1 | 2.0 | |
| | | 2% PETG2 (slip) | | |
| | | | | |
| Ex 2 | 1 | 70% PET2 | 5.0 | 27.0 |
| | | 30% PET3 | | |
| | 2 | 50% EMA | 6.0 | |
| | | 50% MB2 | | |
| | 3 | 60% PET1 | 13.0 | |
| | | 40% PETG1 | | |
| | 4 | 98% PET1 | 3.0 | |
| | | 2% PETG2 (slip) | | |
| | | | | |
| C1 | 1 | 98% PETG1 | 2.0 | 17.0 |
| | | 2% PETG2 (slip) | | |
| | 2 | 60% PET1 | 3.0 | |
| | | 40% PETG1 | | |
| | 3 | 60% PET1 | 10.0 | |
| | | 40% PETG1 | | |
| | 4 | 98% PET1 | 2.0 | |
| | | 2% PETG2 (slip) | | |

The films of Ex 1 and C1 were manufactured through a flat coextrusion process followed by in-line sequential tenterframe orientation as described in detail in the following.

After blending the resins as needed to form each layer, coextrusion was performed through a 4-layer feedblock connected to a triple manifold die. The films were quenched onto a chill roll; an electrostatic pinning system was used to favor intimate contact between the films and the chill roll.

The films thus obtained were then oriented (stretched) and annealed (heat-set), first in the machine (longitudinal) direction through a Machine Direction Orientation unit (MDO) and then in the transversal direction through a Transversal Direction Orientation unit (TDO).

The main operating conditions used to stretch and heat-set the films in the machine direction were:
Pre-heating temperature: 80°C;
Stretching temperature: 91-93°C (depending on the various stretch rolls);
Heat-setting temperature: 82°C;
Cooling temperature: 38°C;
Orientation ratio (MD): 3.0:1
Main operating conditions used to stretch and heat-set the films in the transversal direction were:
Pre-heating temperature: 99°C;
Stretching temperature: 104°C;
Heat-setting temperature: 177°C;
Orientation ratio (TD): 4.5:1

The films so obtained went through a pull roll stand where the edges were trimmed and then they were finally wound on the line winder.

The film of Ex 2 was manufactured through a flat coextrusion process followed by in-line simultaneous tenterframe orientation. Main operating conditions used to stretch and heat-set the films are:
Pre-heating temperature: 98°C;
Stretching Temperature: 98°C;
Heat-setting Temperature: 158°C;
ratio (MD): 3.6:1;
Orientation ratio (TD): 3.6:1.

The films so obtained were cooled down first by an air flow at 30°C and then by passing onto a cooling roll that was cooled with water and kept at 20°C.

### Antifoq Test (score)

A packaging film is defined as "antifog" if its surface directed towards the product allows the droplets of water to lay as a smooth and uniform layer, thus allowing visual inspection of the packaged product.

An internal test method was used to evaluate the antifog performance of the films of Example 1 (Ex.1), and Comparative Example 1 (C1).

Film samples (20 x 20 cm) were secured tightly through a rubber band over 900 ml glass vessels, each containing 250 ml of water, with the sealant layer of the film towards the water without contacting the liquid.

Four samples were prepared for each film, so a total of 8 vessel specimens were prepared.

Two samples for each film were secured over the vessels through the rubber band as described above and the four resulting vessels were placed in a refrigerated cooler at 2-4°C.

The two other samples for each film were first secured over the vessels through the rubber band as described above, then contacted with a hot plate (100°C, 4 sec.) on their external layer; then, the four resulting vessels were placed in a refrigerated cooler at 2-4°C.

The specimens were observed 1 hour, 3 hours and 24 hours after being placed in the cooler. The quality of the antifog properties was scored by three panelists according to the following rating scale, ordered from very poor to excellent antifog properties:
score 1 - very poor: opaque layer of small fog droplets;
score 2 - poor: opaque or transparent layer of large droplets;
score 3 - acceptable: complete layer of large transparent droplets;
score 4 - good: randomly distributed or large transparent droplets;
score 5 - excellent: transparent film without visible water.

The antifog performance of the film of Example 2 (Ex.2) was evaluated through another internal test method. In details, an absorbent pad soaked with 35 ml of tap water was placed on an R-PET tray; the film of Ex.2 was sealed on the tray using a Proseal GTO equipment (sealing time 1 second, sealing temperature 160°C). The resulting sealed tray was placed in a refrigerated cooler at 2-4°C and observed 24 hours after being placed in the cooler. The quality of the antifog properties was scored by three panelists according to the rating scale above. The test was repeated twice.

The results of the antifog test performed for each film are reported in the following Table 3. The antifog score reported in the table is the average of the ratings given by the three panelists.

**Table 3**

| Film | Score at 1 hour | Score at 3 hours | Score at 24 hours |
|---|---|---|---|
| | Glass vessels test, without contact with hot plate | | |
| Ex. 1 | 5.0 | 5.0 | 5.0 |
| C1 | 1.0 | 1.0 | 1.0 |
| | | | |

| | Glass vessels test, contact with hot plate (100°C, 4 sec) | | |
|---|---|---|---|
| Ex. 1 | 5.0 | 5.0 | 5.0 |
| C1 | 1.0 | 1.0 | 1.0 |
| | | | |

| Test on lidded trays | | | |
|---|---|---|---|
| Ex. 2 | - | - | 3.5 |

The films of the invention have good to excellent antifog properties. In particular, the film of Example 1 shows excellent antifog properties, demonstrating that the antifog agent succeeds in properly migrating from layer 2) to the external surface of sealant layer 1), i.e. the surface of layer 1) which does not adhere to layer 2). In fact, as can be seen from Figure 1, the film of Ex.1 is non-fogged, transparency and see-through properties are very good; on the contrary, the C1 film is fogged and does not allow to see through it.

### Clarity, Haze and Gloss 60°

Clarity and haze of the film of Ex.1 and of the C1 film were evaluated according to the standard test method ASTM D1003. The gloss 60°of the film of Ex.1 and of the C1 film was evaluated according to the standard test method ASTM D2457. The results of the test are reported in the following Table 4.

**Table 4**

| Film | Clarity (%) | Haze (%) | Gloss 60° (gloss units) |
|---|---|---|---|
| Ex 1 | 94.2 | 5.9 | 135 |
| C1 | 94.4 | 5.4 | 149 |

As can be seen from the data above, the film of Ex.1 according to the invention shows good optical properties, in terms of clarity, haze and gloss. In particular, the clarity, haze and gloss values of the film of Ex.1 are comparable in respect to the values of the C1 film, which does not contain any antifog agent. This result demonstrates that the presence of an antifog agent in layer 2), and its migration to the surface of the sealant layer 1) not adhered to layer 2) does not affect negatively the optical properties of the film.

### Opening force (Seal strength)

For the evaluation of the force required to open a finished package made with the film of the invention (Ex.1) and with the C1 film, the following internal standard procedure was used.

Specimens having dimensions of 2.54 cm (1 inch) of width and about 15-20 cm of length, cut along the machine direction (namely along the direction of unwinding of the roll) were obtained from films sealed on themselves with the heat-sealable surfaces facing each other (i.e. forming a fin seal). Such sealed films were manually manufactured using the laboratory Gandus TS Impulse Sealer (sealing temperature 140°C, sealing time 0.2 sec, seal along transverse direction).

The strength of the fin seals was evaluated for the film of the invention of Ex. 1 and for the comparative film C1.

The sealed films were manually separated in order to provide detached film portions sufficient to be fixed into the lower jaw and into the upper jaw of a dynamometer. The area to be tested were positioned in the middle of the two jaws, and an adequate pre-tensioning between the two extremities of the fixed sample was applied.

Eight specimens were prepared and tested for each film and the average value of the opening force was calculated.

The dynamometer conditions were:
- equipment: Instron 5564
- starting jaw distance: 2 cm
- crosshead speed: 300 mm/min,
- seal width: 0.8 cm.

The instrument measured the force needed to separate the two sealed films, in particular it measured the average force applied for complete opening of the seal for each sample (g/inch).

In the following Table 5 the average of opening force values of the eight specimens measured for each film is reported.

**Table 5**

| Film | Seal strength (average force) (g/inch) |
|---|---|
| Ex. 1 | 601 |
| C1 | 592 |

As can be seen from the data reported in Table 5, the seal strength of the samples prepared with the film according to the invention (Ex.1) is almost identical to that of the samples made from comparative film C1 (without antifog). This result demonstrates that the incorporation of the antifog agent in layer 2) and its migration to the surface of layer 1) which is not adhered to layer 2) do not threaten the sealability of the film.

## Claims

1. An antifog, optionally coextruded, multilayer film comprising:
1) an outer sealant layer comprising a major proportion of one or more polyesters;
2) an inner layer comprising at least one optionally modified polyolefin and/or at least one ethylene (meth)acrylate/(meth)acrylic acid copolymers and at least one antifog agent;
3) an outer layer, preferably comprising one or more polyesters.

2. The antifog film according to claim 1 wherein layer 1) comprises at least 60 wt%, preferably at least 70 wt%, more preferably at least 80 wt%, even more preferably at least 85 wt%, still more preferably at least 90 wt%, at least 95 wt%, at least 98 wt%, of one or more polyesters.

3. The antifog film according to any of claims 1 or 2 wherein the one or more polyesters of layer 1) are polyethylene terephthalate copolymers.

4. The antifog film according to any of claims 1 to 3 wherein the one or more polyesters of layer 1) are amorphous polyesters, optionally are glycol-modified amorphous polyesters.

5. The antifog film according to any of claims 1 to 4 wherein said at least one polyolefin comprised in layer 2) is selected from the group consisting of: (i) ethylene polymers, preferably ethylene alpha olefin copolymers, more preferably ethylene (C₄-C₁₀) alpha olefin copolymers, even more preferably linear low density polyethylene (LLDPE); (ii) propylene polymers; (iii) butylene polymers and (iv) mixtures thereof,
optionally wherein said polyolefin is a modified polyolefin, preferably an anhydride-modified polyolefin, more preferably a maleic anhydride-modified polyolefin.

6. The antifog film according to any of claims 1 to 5 wherein said at least one ethylene (meth)acrylate/(meth)acrylic acid copolymers are modified, preferably are anhydride-modified, more preferably are maleic anhydride-modified.

7. The antifog film according to any of claims 1 to 6 wherein layer 2) comprises from about 20 wt% to about 100 wt%, preferably from about 25 wt% to about 85 wt%, more preferably from about 30 wt% to about 50 wt% of a mixture of at least one antifog agent and at least one optionally modified polyolefin and/or at least one ethylene (meth)acrylate/(meth)acrylic acid copolymer, optionally wherein said mixture of at least one antifog agent and at least one optionally modified polyolefin and/or at least one ethylene (meth)acrylate/(meth)acrylic acid copolymer is in the form of a masterbatch.

8. The antifog film according to any of claims 1 to 7 wherein layer 2) comprises at least one further resin selected from modified polyolefins, preferably modified ethylene alpha olefin copolymers, ethylene (meth)acrylate/(meth)acrylic acid copolymers, anhydride modified ethylene (meth)acrylate/(meth)acrylic acid copolymers, ethylene vinyl acetate copolymers (EVA) and mixtures thereof.

9. The antifog film according to any of claims 1 to 8 wherein layer 2) comprises at least 60 wt% of resin(s) selected from modified polyolefins, ethylene (meth)acrylate/(meth)acrylic acid copolymers, anhydride modified ethylene (meth)acrylate/(meth)acrylic acid copolymers, ethylene vinyl acetate copolymers (EVA) and mixtures thereof.

10. The antifog film according to any of claims 1-9 wherein layer 2) comprises between 0.1 wt% and 5 wt%, preferably between 0.2 wt% and 3 wt %, more preferably between 0.3% and 2 wt% of said antifog agent with respect to the total weight of layer 2).

11. The antifog film according to any of claims 1 to 10 wherein layer 3) comprises:
- at least 60 wt%, preferably at least 70 wt%, more preferably at least 80 wt%, even more preferably at least 85 wt%, still more preferably at least 90 wt%, at least 95 wt%, at least 98 wt% of one or more polyesters, preferably of polyesters of terephtalic acid, more preferably of polyethylene terephthalate copolymers;
and/or
- one or more polyolefins, preferably selected from (i) ethylene polymers, preferably polyethylene, (ii) propylene polymers, preferably polypropylene, and (iii) mixtures thereof and/or one or more polyamides.

12. The antifog film according to any of claims 1-11 comprising an additional layer 2') positioned between layer 2) and layer 3) and directly adhered to layer 2), said additional layer 2') comprising at least one optionally modified polyolefin and/or at least one ethylene (meth)acrylate/(meth)acrylic acid copolymer and at least one antifog agent.

13. The antifog film according to any of claims 1-12 comprising one or more additional layers positioned between layer 1) and layer 2) and directly adhered to at least one of layer 1) and/or layer 2).

14. The antifog film according to any of claims 1-13 wherein said film is shrinkable, preferably with a percentage of free shrink at 120°C of at least 1%, 5%, 10%, 15% in longitudinal and/or transverse direction, measured in oil according to ASTM D 2732.

15. The antifog film according to any of claims 1-14 wherein said film is fully coextruded.

16. The antifog film according to any of claims 1-15, wherein:
- the total thickness of the film is comprised between 5 and 100 microns, preferably between 8 and 80 microns, more preferably between 10 and 50 microns, even more preferably between 12 and 35 microns, still more preferably between 15 microns and 33 microns; and/or
- the thickness ratio between the total thickness of layer 1) and of additional layers positioned between layer 1) and layer 2) and the thickness of layer 2) is comprised between 1:1.1 and 1:4, preferably between 1:1.3 and 1:2.5, more preferably between 1:1.5 and 1:2.

17. A process for manufacturing the antifog film according to any of claims 1-16, comprising the steps of:
a) co-extruding, preferably by flat coextrusion, at least layers 1), 2) and 3) to obtain a multilayer film,
b) optionally orienting, in at least one of the machine (MD) and/or transverse directions (TD), preferably in both, the multilayer film obtained from step a),
c) optionally heat-setting the oriented film obtained from step b).

18. The process of claim 17 wherein the at least one optionally modified polyolefin and/or at least one ethylene (meth)acrylate/(meth)acrylic acid copolymer and at least one antifog agent of layer 2) are supplied for co-extrusion as a masterbatch.

19. The process of any of claims 17 or 18 wherein in step b) the film is oriented, preferably biaxially oriented, with an orientation ratio preferably comprised between about 2:1 and about 6:1, more preferably between about 3:1 and about 5:1 in both longitudinal and transverse direction.

20. A thermoformed support obtainable by thermoforming the film according to any of claims 1-16, wherein the sealant layer of said film forms the surface of the support that will come into contact or face a supported product.

21. A flexible container obtainable by heat-sealing a film according to any of claims 1-16 on itself, or by heat-sealing two films, of which at least one is a film according to any of claims 1-16, wherein the sealant layer of the film(s) of the invention faces the inside of the container.

22. A package comprising a support, preferably a thermoformed support, more preferably a thermoformed support according to claim 20, a product placed on the support, and a lid comprising, preferably consisting of, the film according to any of claims 1-16, wherein the sealant layer of the film is in contact with or faces the product, and wherein the film is hermetically sealed all around onto said support, thus enclosing the product.

23. A package comprising the thermoformed support according to claim 20, a product placed on the support, and a lid, hermetically sealed all around onto said support thus enclosing the product, wherein said lid is a film, preferably having a polyester sealant layer, more preferably is a film according to any of claims 1-16.

24. A wrapped package comprising a product, optionally placed on a support and a film according to any of claims 1-16 wrapped around said product or around both the product and the support, wherein the sealant layer of the film is in contact with or faces the product.

25. Use of the film according to any of claims 1 to 16 for packaging a product, preferably a food product, more preferably a moist or respiring food product, even more preferably selected from fruits, vegetables, fresh meat, processed meat, fish, cheese, ready meals.
